# EUROPEAN PATENT APPLICATION

(11) **EP 1 118 848 A2**
(43) Date of publication of application: **25.07.2001**
(21) Application number: 01101007.1
(22) Date of filing: 17.01.2001
(51) Int. Cl.: G01J 5/00

(54) **Method and unit for detecting the surface temperature of a heating element**

(30) Priority: 18.01.2000 IT BO200011
(71) Applicant: G. D Societa per Azioni, 40133 Bologna (IT)
(72) Inventor: Spatafora, Mario, 40100 Bologna (IT)
(74) Representative: Jorio, Paolo

(57) **Abstract**

A method and unit for detecting the surface temperature of a heating element (4) movable along a given path (P), whereby the infrared radiation (11) emitted by the heating element (4) is reflected onto a fixed external pyrometer (9) by means of a reflecting member (10) powered to rotate about a respective axis (14) to follow the heating element (4) and continue reflecting the infrared radiation (11) emitted by the heating element (4) onto the fixed external pyrometer (9) for a given length of time.

## Description

The present invention relates to a method of detecting the surface temperature of a movable heating element.

More specifically, the present invention relates to a method of detecting the temperature of a heating element movable along a given path.

The present invention is particularly advantageous for use on machines for wrapping tobacco articles - to which the following description refers purely by way of example - and on which superimposed portions of sheets of heat-seal material are sealed to each other by contact with movable sealing devices normally defined by movable heating elements arranged along a linear conveyor or along the surface of a sealing drum rotating about a respective axis.

One of the most critical parameters of wrapping machines of the type described above is the surface temperature of the movable heating elements, even the slightest deviation of which from the optimum temperature normally results in the article being rejected, due to poor sealing or wrinkling and/or singeing of the heat-seal material.

In the past, to keep a constant check on the surface temperature of the heating elements, these were fitted inside with one or more thermocouples, the efficiency of which, however, proved extremely limited, by detecting the temperature of points inside the heating elements, as opposed to the surface temperature, which is strongly affected by external phenomena, and in particular by ventilation phenomena caused by the traveling speed of the heating elements themselves.

To eliminate the above drawbacks, patents US 4,008,616 and GB 2,250,500 employ a pyrometer located in a fixed position along a path of the heating elements, and which directly receives and measures the infrared emission of the heating elements to accurately determine the surface temperature of the elements.

For relatively low traveling speeds and/or feed rates of the heating elements, the above solution has proved highly successful, but is totally unfeasible in the case of relatively high traveling speeds and/or feed rates. That is, over and above a given traveling speed, the length of time the pyrometer is exposed to the infrared emissions of each heating element is far too short for the surface temperature of the heating element to be measured accurately; and, over and above a given feed rate, the pyrometer cannot be reset between one reading and the next.

It is an object of the present invention to provide a method of detecting the surface temperature of a heating element, designed to eliminate the aforementioned drawbacks.

According to the present invention, there is provided a method of detecting the surface temperature of a heating element movable along a given path, the method comprising the step of reflecting the infrared radiation emitted by said heating element onto a fixed external pyrometer by means of a reflecting member, and being characterized by comprising the further step of gradually varying the orientation of said reflecting member to follow the heating element along at least a portion of said path and continue reflecting the infrared radiation emitted by the heating element onto the fixed pyrometer for a given length of time.

The present invention also relates to a unit for detecting the surface temperature of a heating element.

According to the present invention, there is provided a unit for detecting the surface temperature of a heating element movable along a given path; the heating element emitting infrared radiation; and the unit comprising a fixed external pyrometer, and a reflecting member for reflecting said infrared radiation onto said fixed pyrometer, and being characterized by also comprising actuating means connected to said reflecting member and for gradually varying the orientation of the reflecting member to follow the heating element along at least a portion of said path and continue reflecting the infrared radiation emitted by the heating element onto the fixed pyrometer for a given length of time.

A number of non-limiting embodiments of the present invention will be described by way of example with reference to the accompanying drawings, in which:
Figure 1 shows a schematic view in perspective of a portion of a wrapping machine featuring a first preferred embodiment of the detecting unit according to the present invention;
Figure 2 shows a schematic view in perspective of the Figure 1 wrapping machine portion featuring a second preferred embodiment of the detecting unit according to the present invention.

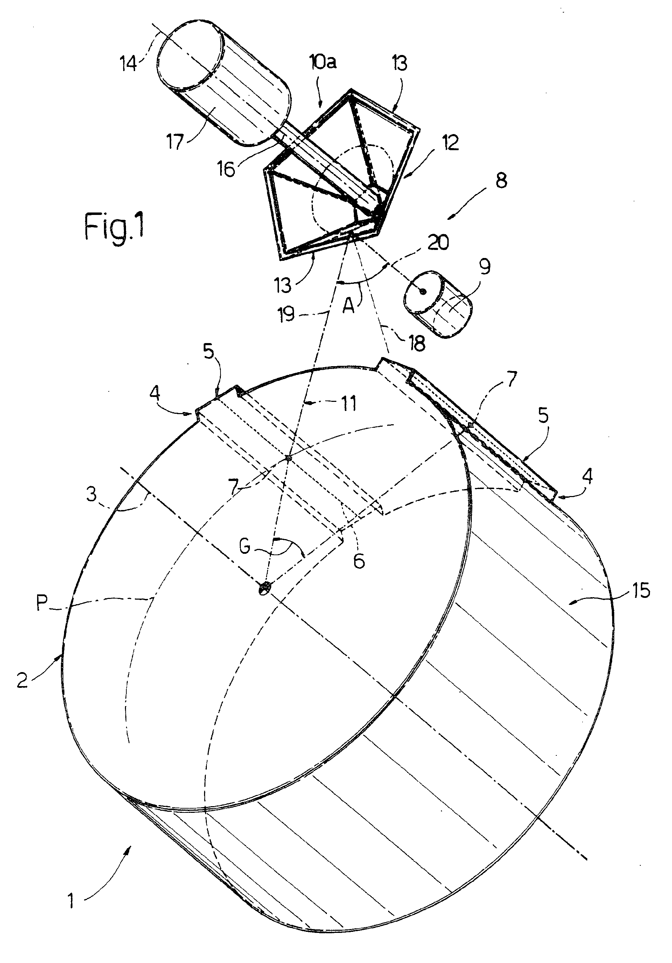

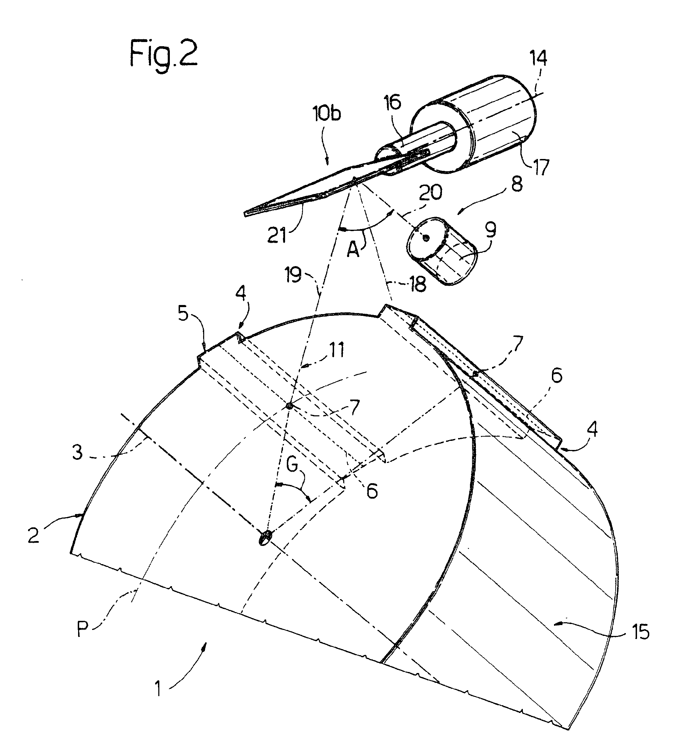

Number 1 in Figures 1 and 2 indicates as a whole a wrapping machine (shown only partly) for wrapping tobacco articles (not shown).

Wrapping machine 1 comprises a powered sealing drum 2 mounted to rotate (clockwise in Figure 1) at substantially constant angular speed about a respective central axis 3. Along its outer periphery, sealing drum 2 comprises a number of equally spaced heating elements, each of which is defined by an outer rib 4 defined by a substantially rectangular, flat outer surface 5 and having a central longitudinal axis 6 parallel to axis 3 and having a central point 7. Each surface 5 constitutes a sealing surface movable along a circular path P, and with which superimposed portions, for sealing, of sheets (not shown) of heat-seal material are brought into contact by means of known conveyors (not shown).

Drum 2 is provided with a unit 8 for detecting the surface temperature of ribs 4. Detecting unit 8 comprises a fixed external pyrometer; and a reflecting member 10 for selectively reflecting onto pyrometer 9 the infrared radiation 11 emitted by surface 5 (conventionally at point 7) of each rib 4.

With reference to the Figure 1 embodiment, reflecting member 10 - here indicated 10a - is substantially in the form of a hollow pyramid 12 having a number of outer reflecting faces 13 arranged uniformly about a central axis 14, which, in the example shown, is located outside drum 2, facing a lateral surface 15 of drum 2, and extends in a direction substantially parallel to axis 3. Hollow pyramid 12 is fitted to a shaft 16 coaxial with central axis 14 and defining the output of a motor 17 for rotating hollow pyramid 12 anticlockwise, in Figure 1, about axis 14, so that reflecting faces 13 are fed about axis 14 at the same feed rate as ribs 4 along path P.

In actual use, motor 17 is so operated as to gradually vary the orientation of each outer reflecting face 13, so as to enable each outer reflecting face 13 to follow respective rib 4 along a portion of path P and continue reflecting the infrared emission 11 of rib 4 onto fixed pyrometer 9 for a given length of time.

More specifically, for a respective reflecting period, each outer reflecting face 13 is maintained constantly perpendicular to a bisector 18 of a variable angle A defined by two segments 19 and 20 connecting outer reflecting face 13 to the intermediate point 7 of respective rib 4, on one side, and to fixed pyrometer 9, on the other. As such, detecting time is not limited simply to the time taken by each rib 4 to travel past pyrometer 9, but to the time taken by drum 2 to rotate about axis 3 by a center angle G between two successive ribs 4, and is therefore sufficient to enable pyrometer 9 to accurately detect the surface temperature of each rib 4.

After each measurement, the gradual rotation of pyramid 12 causes the next face 13 to reflect onto pyrometer 9 the infrared emission of the next rib 4.

In the Figure 2 embodiment, reflecting member 10a in Figure 1 is replaced by a reflecting member lOb defined by a single flat mirror 21 fitted to shaft 16 and so oscillated by motor 17 as to selectively and successively perform, for successive ribs 4, the movements, work and function performed by each of faces 13 as described above.

## Claims

1. A method of detecting the surface temperature of a heating element (4) movable along a given path (P), the method comprising the step of reflecting the infrared radiation (11) emitted by said heating element (4) onto a fixed external pyrometer (9) by means of a reflecting member (10a; 10b), and being characterized by comprising the further step of gradually varying the orientation of said reflecting member (10a; 10b) to follow the heating element (4) along at least a portion of said path (P) and continue reflecting the infrared radiation (11) emitted by the heating element (4) onto the fixed pyrometer (9) for a given length of time.

2. A method as claimed in Claim 1, characterized in that the orientation of said reflecting member (10a; 10b) is varied by rotating the reflecting member (10a; 10b) about an axis (14) of rotation.

3. A method as claimed in Claim 2, characterized in that said reflecting member (10a) is substantially in the form of a pyramid (12) having a fixed axis (14) coincident with said axis (14) of rotation, and a number of outer reflecting faces (13); the orientation of said reflecting member (10a) being varied by rotating the reflecting member (10a) about said axis (14) of rotation, so that said faces (13) are fed about said axis (14) at a feed rate equal to a feed rate of said heating elements (4) along said path (P).

4. A method as claimed in Claim 3, characterized in that, for a respective reflecting period, each said outer reflecting face (13) is maintained constantly perpendicular to a bisector (18) of an angle (A) defined by two segments (19, 20) connecting the outer reflecting face (13) to a respective said heating element (4), on one side, and to said fixed pyrometer (9), on the other.

5. A method as claimed in Claim 2, characterized in that said reflecting member (10b) is substantially in the form of a flat mirror (21) having a fixed longitudinal axis (14) coincident with said axis (14) of rotation; the orientation of said flat mirror (21) being varied by oscillating the flat mirror (21) about said axis (14) of rotation at an oscillation rate equal to a feed rate of said heating elements (4) along said path (P).

6. A method as claimed in Claim 5, characterized in that, for each half oscillation about said axis (14) of rotation relative to reflection of the infrared radiation (11) emitted by one of said heating elements (4), said flat mirror (21) is maintained constantly perpendicular to a bisector (18) of an angle (A) defined by two segments (19, 20) connecting the flat mirror (21) to said heating element (4), on one side, and to said fixed pyrometer (9), on the other.

7. A unit for detecting the surface temperature of a heating element movable along a given path (P); the heating element (4) emitting infrared radiation (11); and the unit comprising a fixed external pyrometer (9), and a reflecting member (10a; 10b) for reflecting said infrared radiation (11) onto said fixed pyrometer (9), and being characterized by also comprising actuating means (17) connected to said reflecting member (10a; 10b) and for gradually varying the orientation of the reflecting member (10a; 10b) to follow the heating element (4) along at least a portion of said path (P) and continue reflecting the infrared radiation (11) emitted by the heating element (4) onto the fixed pyrometer (9) for a given length of time.

8. A unit as claimed in Claim 7, characterized in that said reflecting member (10a; 10b) is mounted so as to be rotated by said actuating means (17) about an axis (14) of rotation.

9. A unit as claimed in Claim 8, characterized in that said reflecting member (10a) is substantially in the form of a pyramid (12) having a fixed axis (14) coincident with said axis (14) of rotation, and a number of outer reflecting faces (13); said actuating means (17) being connected to said reflecting member (10a) to rotate the reflecting member (10a) about said axis (14) of rotation, so that said faces (13) are fed about said axis (14) at a feed rate equal to a feed rate of said heating elements (4) along said path (P).

10. A unit as claimed in Claim 8, characterized in that said reflecting member (10b) is substantially in the form of a flat mirror (21) having a fixed longitudinal axis (14) coincident with said axis (14) of rotation; said actuating means (17) being connected to said flat mirror (21) to oscillate the flat mirror (21) about said axis (14) of rotation at an oscillation rate equal to a feed rate of said heating elements (4) along said path (P).
